# EUROPEAN PATENT APPLICATION

(11) **EP 2 535 679 A1**
(43) Date of publication of application: **19.12.2012**
(21) Application number: 11170072.0
(22) Date of filing: 15.06.2011
(51) Int. Cl.: G01B 9/02, G02B 27/48

(54) **Improvements in or relating to interferometry**

(71) Applicant: Lambda-X, 1400 Nivelles (BE)
(72) Inventor: Beghuin, Didier, 7850 ENGHIEN (BE)
(74) Representative: Mackett, Margaret Dawn

(57) **Abstract**

Described herein is an optical system (100) for reducing the effects of speckle in an interferometer system. The system (100) comprises a laser array (110), intermediate optics (120), a diffuser (130), an integrator (140), and a projection lens system (150) comprising first and second light projection lenses (160, 170) with and an aperture (180) located therebetween. The integrator (140) comprises a uniform output face (190) which can be considered to be a secondary source that is very homogeneous in intensity. The secondary source has been shown to have low speckle contrast whilst retaining high temporal coherence. The low speckle contrast is inversely proportional to the number of laser emitters in the laser array (110) and therefore a vertical cavity surface emitting laser is the preferred laser array as at least 1000 individual emitters can be provided in one device.

## Description

The present invention relates to improvements in or relating to interferometry, and is more particularly, although not exclusively, concerned with fringe generation for optical measurement.

Interferometers are used to measure wavelength, distance, refractive index and temporal coherence of two optical beams. A single beam of coherent light is split into two identical beams which travel different paths before being recombined at a detector. The path difference between the two beams creates a phase difference which produces an interference pattern that is indicative of changes between the two paths.

Laser-based sine fringe generation is used in numerous applications, such as, off axis digital holography or profilometry by structured light projection. The number of fringes that are generated by an interferometer using a laser light source is determined by the temporal coherence of the laser light source which is directly linked to the spectral width of the laser light.

In EP-A-1119798, an off-axis digital holography method is disclosed in which amplitude and quantitative phase contrast images are reconstructed from a digital hologram to provide direct applications in metrology, for example, surface profilometry, refractive index measurements or more general quantitative material testing. The configuration used for hologram creation is adjusted to produce a Fresnel hologram for which the diffraction calculation can be performed in the Fresnel approximation. The off axis geometry can be restricted to small angles to avoid spatial frequencies of the created interferogram exceeding the resolution power of the imaging system. The hologram may be the result of the interference between an object wave and more than one reference wave, each reference wave corresponding to a different off-axis configuration. In this case, the corresponding reconstructed images appear at different locations in the observation plane.

Light beams produced by lasers used for fringe generation also have high spatial coherence. However, high spatial coherence is often detrimental to the quality of the interference fringes obtained as well as to the homogeneity of the illumination. The quality of the interference fringes is influenced by optical noise generated by dust scratches or other component imperfections picked up by the coherent light beams and the inherent ability of the laser light to maintain its ability to produce speckles.

Speckle is known to cause problems in the detection of inspected surfaces. Reducing spot size reduces speckle but also reduces the amount of light available in the optical system. Therefore, a trade-off between enduring speckle and optimising detection sensitivity and/or throughput is usually needed.

For a single, pure speckle field, the contrast has a value of 1. When fringe patterns are analysed, the modulation of the fringes, the phase of the fringes and the total intensity are parameters of interest. However, the speckle field strongly affects each of these parameters as it introduces noise.

The contrast of speckle fields can be decreased by temporal averaging of de-correlated speckle fields. In practice, a common method is to rotate a ground glass in the beam generated by the laser. This is described in an article by by Toshimitsu Asakura entitled "Spatial coherence of laser light passed through rotating ground glass", Springer, Optical and Quantum Electronics, Vol. 2, No. 3, pages 115 to 123, 1970 or in an article by Zhiqiang Liu, Takeshi Gemma, Joseph Rosen and Mitsuo Takeda entitled "An Improved Illumination System for Spatial Coherence Control", Interferometry XII: Techniques and Analysis, edited by Katherine Creath and Joanna Schmit, SPIE, Vol. 5531, pages 220 to 227, 2004. In this article, an illumination system is described for a longitude coherence control system in which the influence of directivity of ground glass is removed and the coherence function can be controlled.

This method is efficient and the spatial coherence can be tuned easily. Nevertheless, when a low acquisition time becomes essential, the temporal averaging of the ground glass requires the rotating ground glass to be rotated faster which leads to technical limitations. Furthermore, the balancing of the high speed rotating ground glass generates vibrations that are detrimental to the quality of the generated fringes.

Spatial coherence in a single laser beam can be reduced as described in US-A-2004/0201842. Several coherence reduction optical apparatus are disclosed for reducing speckle including the use of optical fibre bundles, integrating spheres and diffraction gratings, the coherence reduction optical apparatus being located in the imaging beam path. When optical fibre bundles are used, at least two optical fibre bundles are provided containing fibres of different lengths. The fibres in each bundle have different lengths and are randomly arranged within their bundles. In the first bundle, the fibres have differences in length such that the difference in length between any two such fibres is greater than the coherence length of the light source used. The imaging beam is divided into multiple beams so that each beam penetrates one of the fibres in the first bundle. At the output of the first bundle, the beams coming out from each fibre is imaged on all fibres in the second bundle and the output from the second bundle comprises beams having optical path length differences which are all greater than the coherence length of the light source. When the coherence reduction optical apparatus comprises an integrating sphere, the imaging beam is input to the sphere and reflected within it to provide multiple reflected output beams with reduced coherence. Similarly, when diffraction gratings are used in the coherence reduction optical apparatus, the imaging beam is diffracted by a first grating and the multiple diffracted beams then hit the second grating where they are diffracted again. The output from the second grating is beam that is incoherent.

It is also known to combine different laser sources to reduce speckle contrast. In US-A-6102552, an illumination method is disclosed that provides control of spatial distributions of power density, ray angles, wavelength, polarisation and temporal behaviour to meet specific parameters over a prescribed target zone. Multiple coherent light sources are used to provide overlapping beams from multiple laser sources. The illumination fields produced have reduced temporal coherence with reduces speckle from the illuminated target.

It is therefore an object of the present invention to provide a method of generating improved interference fringes having low speckle using a source that has both high temporal and low spatial coherence.

In accordance with a first aspect of the present invention, there is provided a method of generating reduced speckle interference fringes in an interferometry system, the method comprising the steps of:
a) generating a primary light source comprising a plurality of coherent light beams; b) integrating the plurality of coherent light beams to provide a secondary light source; and c) using the secondary light source to generate reduced speckle interference fringes; characterised in that the secondary light source has reduced spatial coherence.

Step c) comprises splitting the secondary light source into first and second light beams which traverse respective first and second light paths in the interferometry system, and recombining the first light beam and the second light beam to produce the interference fringes.

In accordance with another aspect of the present invention, there is provided interferometry apparatus for generating reduced speckle interference fringes, characterised in that the apparatus further comprises a secondary light source for generating the reduced speckle interference fringes.

Preferably, the secondary light source comprises a random mix of light beams that are incoherent with respect to one another.

Light from the secondary light source is divided into first and second light beams, the first and second light beams being directed along respective first and second paths and being recombined to produce the interference fringes.

The interferometry apparatus may comprise any one of the following: a Mach-Zendher interferometer, a Linnik interferometer, a Michelson interferometer, a Sagnac interferometer, and a Mireau interferometer.

In another embodiment, the interferometry apparatus may comprise a shearing interferometer. Such an interferometer may comprise first and second polarising elements, and first and second Wollaston prisms.

For a better understanding of the present invention, reference will now be made, by way of example only, to the accompanying drawings in which:-
Figure 1 illustrates a schematic drawing of an optical system for generating a secondary source from a laser array;
Figure 2 illustrates a schematic drawing of a first embodiment of a Mach-Zehnder type interferometer for generating interference fringes using the optical system of Figure 1;
Figure 3 illustrates a schematic drawing of a second embodiment of a Mach-Zehnder interferometer type for generating interference fringes using the optical system of Figure 1;
Figure 4 illustrates a schematic drawing of a Michelson type interferometer for generating interference fringes using the optical system of Figure 1;
Figure 5 illustrates a schematic drawing of a Sagnac type interferometer for generating interference fringes using the optical system of Figure 1;
Figure 6 is similar to Figure 5 but is adapted for fast phase shift;
Figure 7 illustrates a schematic drawing of a Linnik type interferometer for generating interference fringes using the optical system of Figure 1;
Figure 8 is similar to Figure 2 but illustrates an interferometer that utilises a further light source; and
Figure 9 illustrates a shearing interferometer.

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

It will be understood that the terms "vertical" and "horizontal" are used herein refer to particular orientations of the Figures and these terms are not limitations to the specific embodiments described herein.

The present invention provides a method of generating interference fringes with a secondary source derived from a combination of multiple lasers. The high temporal coherence and low spatial coherence of the secondary source leads unprecedented performance in terms of the maximum number of fringes that can be obtained, fringe quality and phase noise. In addition, the method of the present invention does not require any moving parts and can be used independently from image acquisition.

A preferred source is based on a vertical cavity surface emitting laser (VCSEL), as the technology now allows the production of a great number of independent lasers on the same wafer, with small pitches between emitters. Thousands of single emitters can be juxtaposed on surfaces of a few square millimetres which provide speckle contrast not detectable by standard means. This implementation also provides the capability of high speed imaging, first, due to the high power available, and, more fundamentally, due the characteristic beat frequency between different VCSEL occurs at typical frequencies of hundreds of GHz.

The possible practical implementations of the present invention include all types of known interferometers, for example, Linnik, Mireau, Mach-Zendher, Michelson, or Sagnac. Some of these types of interferometers are intrinsically self-aligned, such as, the Sagnac interferometer, whilst others require careful alignment to ensure that the recombined laser beams are locally mutually spatially and temporally coherent. This can be achieved only if the propagation length and the spatial overlapping of the two propagating beams are sufficiently identical when they are recombined in the beam combiner of the interferometer.

The Mach-Zehnder interferometer is a device used to determine the relative phase shift between two collimated beams from a coherent light source. The interferometer has been used, amongst other things, to measure small phase shifts in one of the two beams caused by a small sample or the change in length of one of the paths.

The Michelson interferometer is the most common configuration for optical interferometry in which an interference pattern is produced by splitting a beam of light into two paths, bouncing the beams back and recombining them. The different paths may be of different lengths or be composed of different materials to create alternating interference fringes on a back detector.

A Linnik interferometer is a two-beam interferometer used in microscopy and surface contour measurements or topography. The basic configuration is the same as a Michelson interferometer, but measurement optics is used in the reference arm, which essentially duplicate the objective measurement optics in the measurement arm providing an ability to compensate for chromatic dispersion and other optical aberrations.

A Mirau interferometer also operates on the same basic principle as a Michelson interferometer, but differs in that the physical location of the reference arm is located within a microscope objective assembly.

A Sagnac interferometer is a ring interferometer that is mounted on a rotatable platform. Incoming light is split so that light in the reference and measurement arms is made to follow opposite paths around the ring. On return to the point of entry, the light is allowed to exit the apparatus to create an interference pattern. The position of the interference fringes is dependent on the angular velocity of the device.

From an application point of view; the production of interference fringes with such a source in a Linnik configuration, for example, allows optical coherence tomography (OCT) images to be obtained with a coherence sectioning limited by the numerical aperture of the microscope objective only. This is therefore another type of coherence reduction compared to most of the known OCT methods in which coherence reduction is mostly temporal-based. The source, being temporally coherent does not suffer from dispersion and therefore, the balancing of the optical path length occurs at a single wavelength. This relaxes the constraints generally present in white light interferometry for equalising the optical path length for all wavelengths in the source. In deflectometry or in profilometry, the fringe pattern that is often used to generate the phase images coding for the angular change or for the height of the object respectively can be generated this way, allowing potentially very fast phase changes, for phase shifting-based measurements, by phase modulation of one of the two arms of the interferometer.

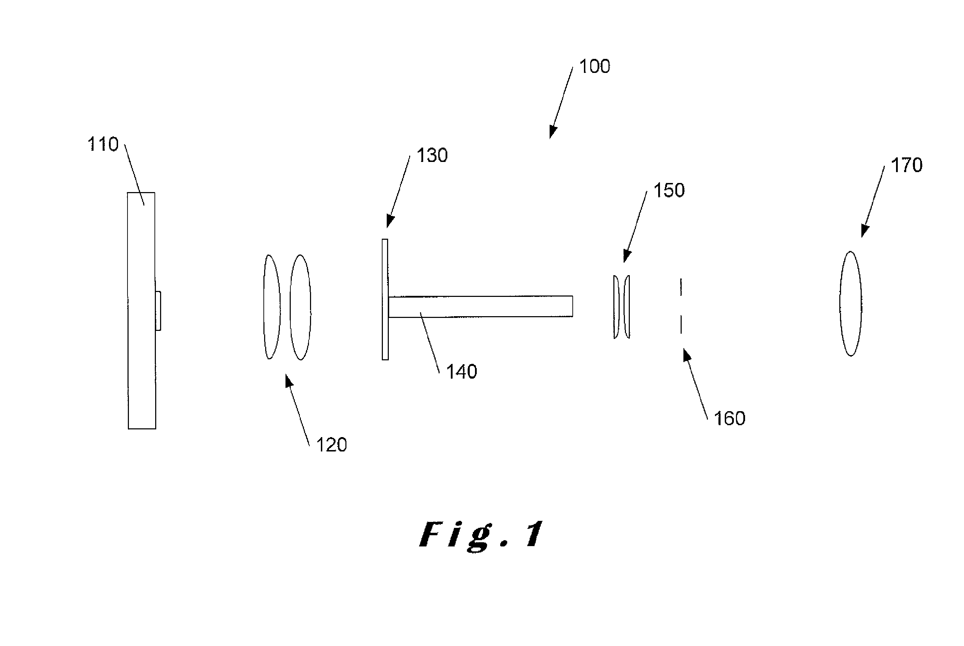

Referring now to Figure 1, an optical system 100 is shown for forming a secondary source. The system 100 comprises a laser array 110, typically, a VCSEL array, intermediate optics 120, a diffuser 130, an integrator 140, and a projection lens system 150. The projection lens system 150 comprises first and second light projection lenses 160, 170 with and an aperture 180 located between the first and second projection lenses 160, 170.

In this embodiment, the laser array 110 is coupled to the integrator 140 via the intermediate optics 120 but in another embodiment (not shown), the laser array 110 may be coupled directly to the integrator 140.

The diffuser 130 is shown provided at the input to the integrator 140, but it will readily be appreciated that the integrator could also be located at the output from the integrator 140. Alternatively, a diffuser may be provided at both the input and the output of the integrator 140.

The integrator 140 comprises a uniform output face 190 which, in accordance with the present invention, can be considered to be a secondary source that is very homogeneous in intensity. The secondary source provided output face 190 can be relayed by the projection lens system 150 to any field of view which requires illumination.

Speckle contrast is inversely proportional to the number of mutually incoherent emitters. When a VCSEL is used as the laser array 110, typically more than 1000 emitters are present. After such a number of laser beams has passed through the integrator 140, the same number of spatially incoherent light beams are present. This reduces the speckle contrast to less than 0.001.

It will be appreciated that any suitable laser array can be used provided a sufficiently high number of spatially incoherent light beams can be obtained at output face 190 of the integrator 140.

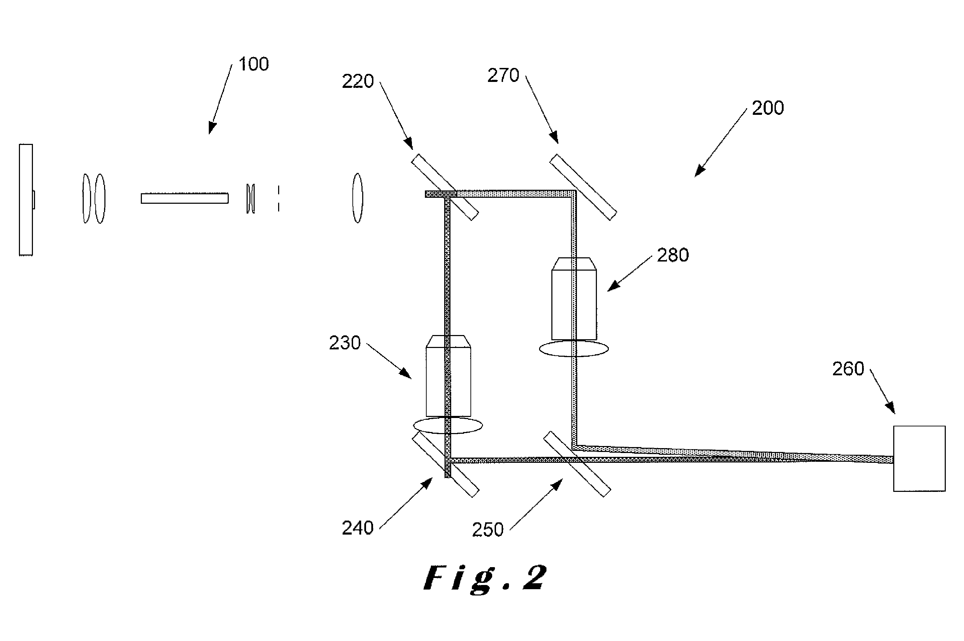

Figure 2 illustrates a first embodiment of a Mach-Zehnder type interferometer system 200. Components previously described with reference to Figure 1 are referenced alike. The system 200 comprises a first beam splitter 210, a first mirror 220, a second beam splitter 230 and a second mirror 240 that define the arms of the interferometer system 200. In particular, first beam splitter 210, first mirror 220 and second beam splitter 230 define a first arm of the interferometer and first beam splitter 210, second mirror 240 and second beam splitter 230 define a second arm of the interferometer as shown.

In addition, a first set of optics 250 is provided in the first arm and a second set of optics 260 is provided in the second arm of the interferometer system 200. A camera 270 is arranged to receive light from both paths of the interferometer system as shown.

Spatially incoherent light from the output face 190 of the integrator 140 is projected onto the first beam splitter 210 by the projection lens system 150. The light is split in two along the first and second arms of the interferometer system 200 as described above.

Interference fringes are formed at the camera 270 due to difference in path length of the two arms of the interferometer system 200 as is well known in the field of optics. The number of interference fringes formed may vary between zero, when both arms have identical path length, and thousands depending on the temporal coherency of the secondary source provided by the optical system 100. However, the fringes obtained at the camera 270 have low speckle contrast as described above.

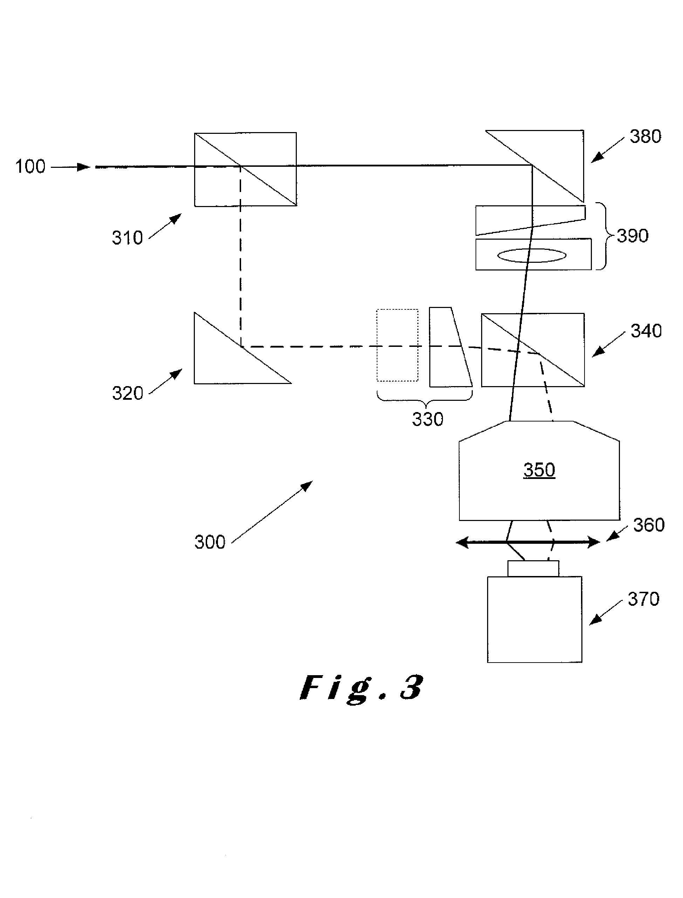

Figure 3 is similar to Figure 2 in that a Mach-Zehnder interferometer type system 300 is shown. As before, first beam splitter 310, first prism 320, and second beam splitter 330 form the first arm and the first beam splitter 310, second prism 340 and second beam splitter 330 form the second arm. A lens 350 and a camera 360 are arranged to receive light from the first and second arms of the interferometer system 300.

Optics 370, 380 are also provided in respective first and second arms of the interferometer system 300 as shown. Optics 370 includes a compensator element 374 and a 1.5° wedge element 378. Similarly, optics 380 comprises a wedge element 382 and a lens element 386.

Additionally, a tube lens 390 is provided between the lens 350 and the camera 360. The camera 360 may comprise a 6 Megapixel liquid crystal display (LCD) camera.

In Figure 3, the optical system 100 is not shown but its output is indicated by the incoming arrow labelled 100.

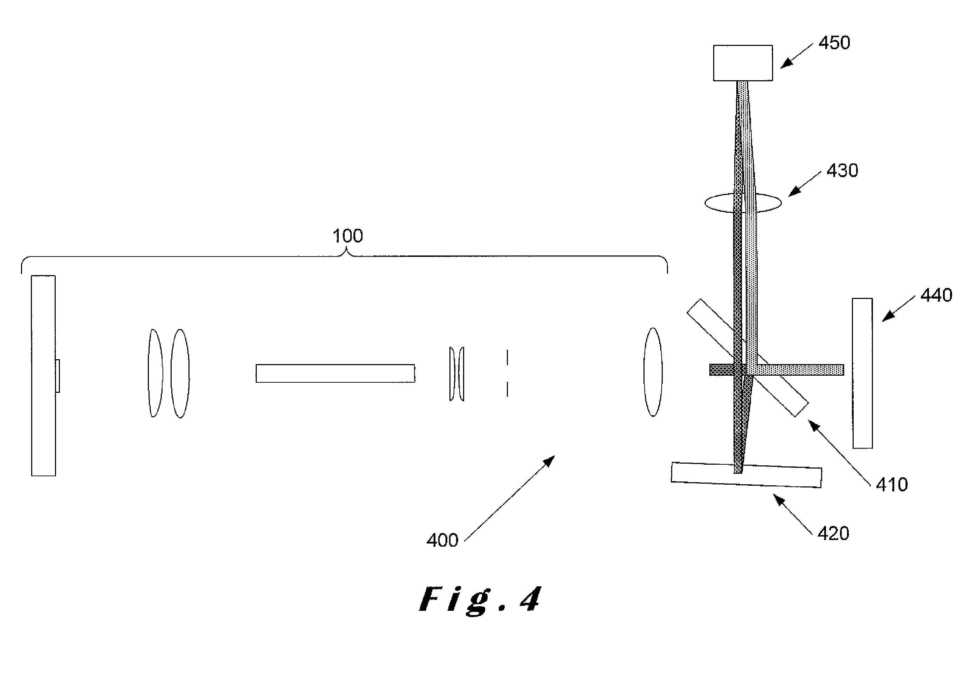

Figure 4 illustrates fringe generation using a Michelson type interferometer system 400. The system 400 comprises a beam splitter 410, a first mirror 420 and a second mirror 430. A first arm is defined by beam splitter 410 and the first mirror 420 and the second arm is defined by the beam splitter 410 and the second mirror 430. In both arms, the optical paths pass through the beam splitter 410 twice. Light from both arms of the interferometer system 400 is focussed by lens 440 on a plane 450 as shown.

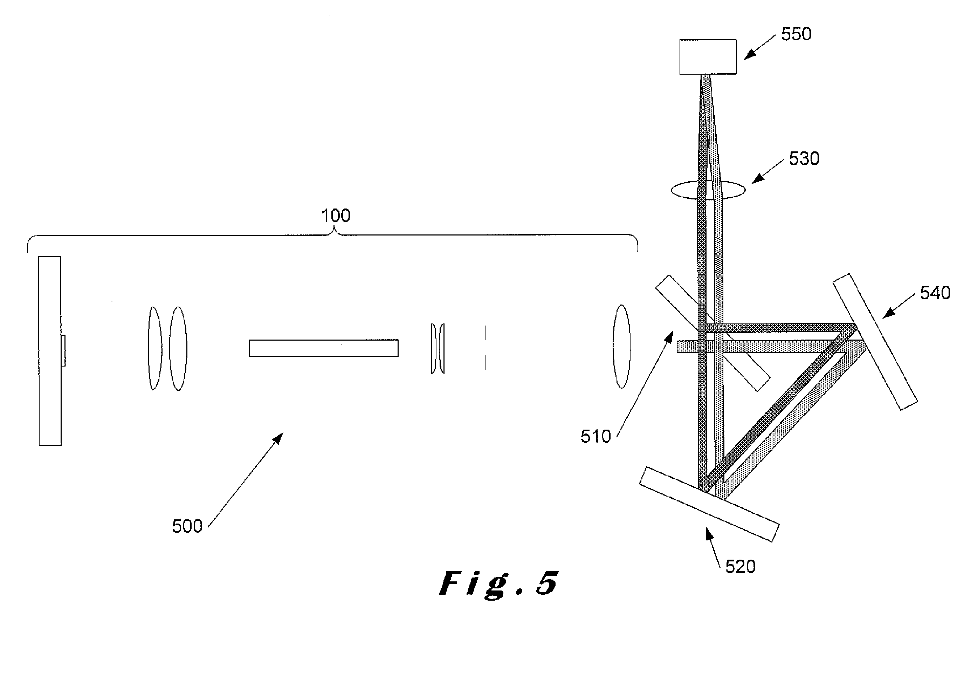

Figure 5 illustrates a Sagnac type interferometer system 500 that comprises a beam splitter 510, and first and second mirrors 520, 530 that define a triangular ring. The beam splitter 510 splits incoming light into two paths that travel in opposite directions around the triangular ring. The output from each path is focussed by a lens 540 onto a plane 550 as shown.

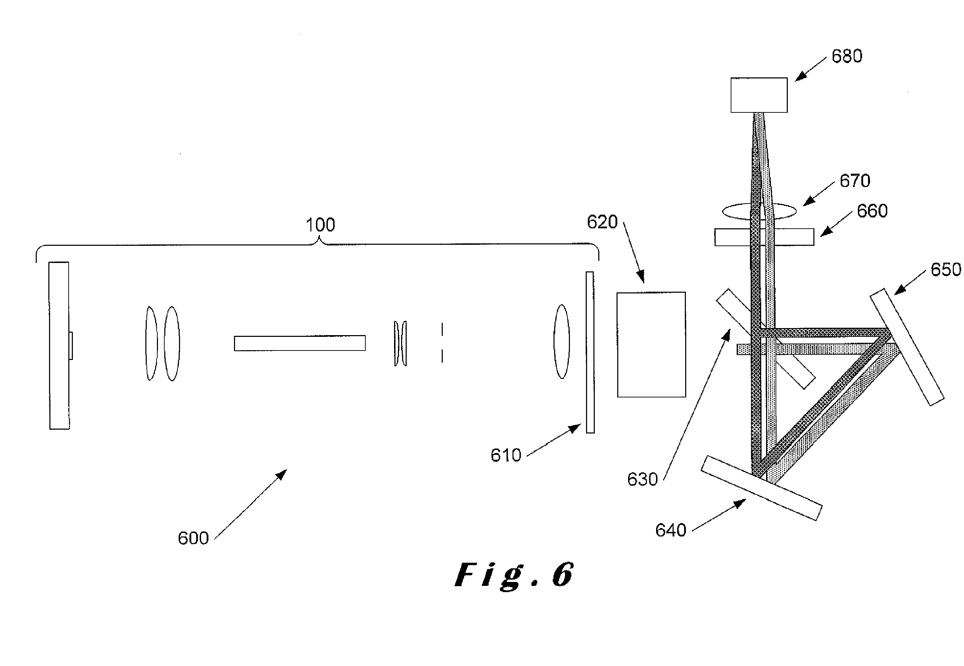

Figure 6 is similar to Figure 5 and components that have previously been described with reference to Figure 5 are referenced alike. In Figure 6, a Sagnac type interferometer system 600 is shown that differs from the interferometer system 500 shown in Figure 5 in that a polarising beam splitter 610, a first polarising element 620, a second polarising element 630 and a variable retarder 640 are provided. Polarising beam splitter 610 replaces the beam splitter 510 in Figure 5 but the first and second mirrors 520, 530 are the same with the focussing lens 540 focussing the two output beams onto the plane 550 to produce the interference fringes.

As shown in Figure 6, the output from the optical system 100 is passed to the first polarising element 620 where it is polarised before entering the rest of the system 600. Having been polarised by the first polarising element, the light then passes to the variable retarder 640, for example, a Pockels cell, before entering the ring created by the polarising beam splitter 610 and the two mirrors 520, 530. On the output side, the light exiting the ring passes through the second polarising element before being focussed by the lens 540 on the plane 550.

The system 600 shown in Figure 6 has the ability to generate interference fringes even with fast phase shifts.

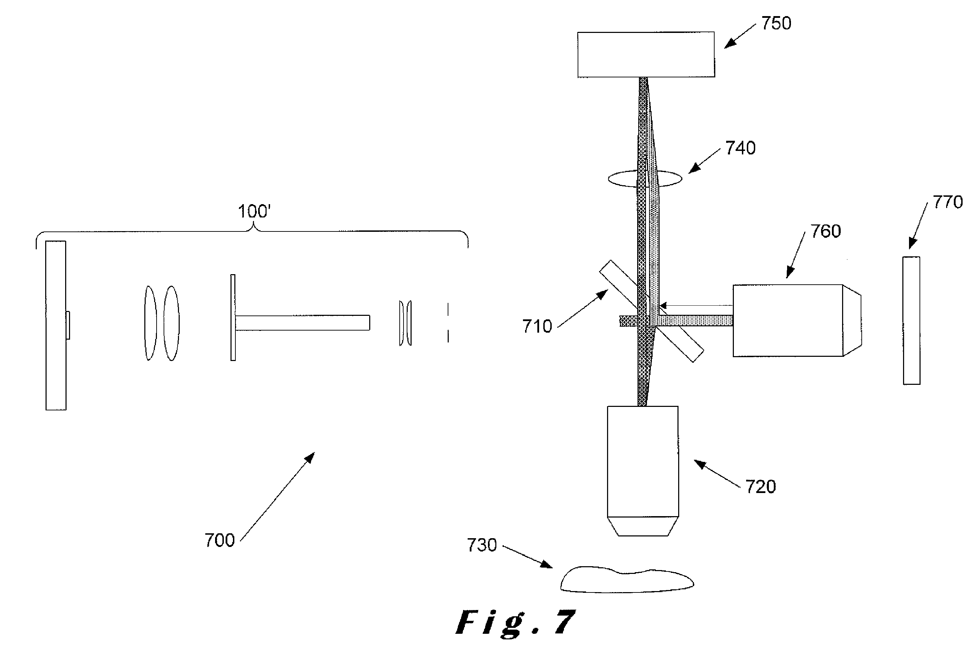

Figure 7 illustrates a Linnik type interferometer system 700 that uses microscope elements in both arms of the interferometer. Here, a beam splitter 710 splits the incoming light into a reference path as defined by microscope element 720 and mirror 730 and a measurement path as defined by microscope element 740 and an object to be measured 750. The two paths are focussed by lens 760 onto a plane 770 as shown. Light is provided by optical system 100' that is similar to optical system 100 but without lens 170 in the projection system 150.

In this configuration, the system operates in a similar way to white light interferometry, but here the depth is limited by the spatial coherence and not by the temporal coherence. This allows depth measurements to be taken in dispersive transparent media which is not possible with white light interferometry. Such a system can be considered as an OCT system with spatial coherence gating instead of temporal coherence gating as is normal in most standard OCT systems.

It is envisaged that similar results can be obtained for Mirau type interferometer systems.

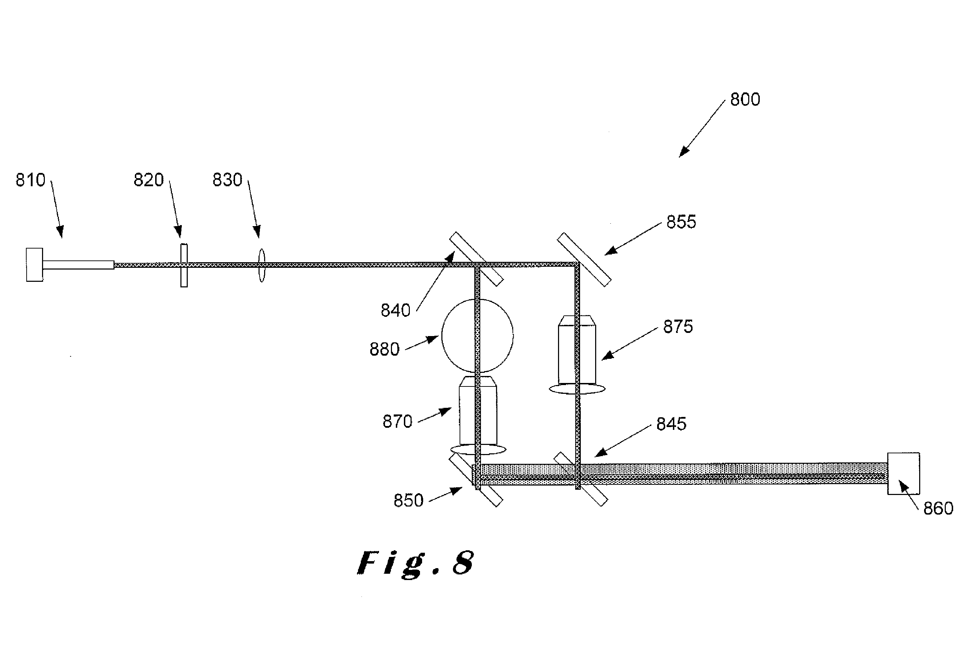

Figure 8 illustrates an embodiment of an interferometer 800 that can be used with the present invention. Here, a secondary source 810 mixing several individual lasers provides beams of laser light that passes to a device or system 820 for adjusting the spatial coherence of the laser light beam. Light output from the device or system 820 is focussed by a lens 830 onto a first beam splitter 840 where part of the light follows a first path as defined by a first mirror 850 and a second beam splitter 845 to a camera 860, and part of the light follows a second path as defined by a second mirror 855 and second beam splitter 845 to the camera 860. First and second sets 870, 875 of optics are provided in the first and second paths respectively.

In addition, a chamber 880 is provided in the first path between the first beam splitter 840 and the first mirror 850 as shown. An object or other material to be examined (not shown) is placed in the chamber 880. The light passing through the chamber 880 is modified by the present of the object or other material located therein.

Interference fringes are detected at the camera 860 due to the interference of light from the laser 810 travelling around the first and second paths. Such interference fringes provide information relating to the contents of the chamber 880.

Although a chamber 880 is provided in the particular embodiment shown in Figure 8, it will be appreciated that an object can be mounted directly in the first path.

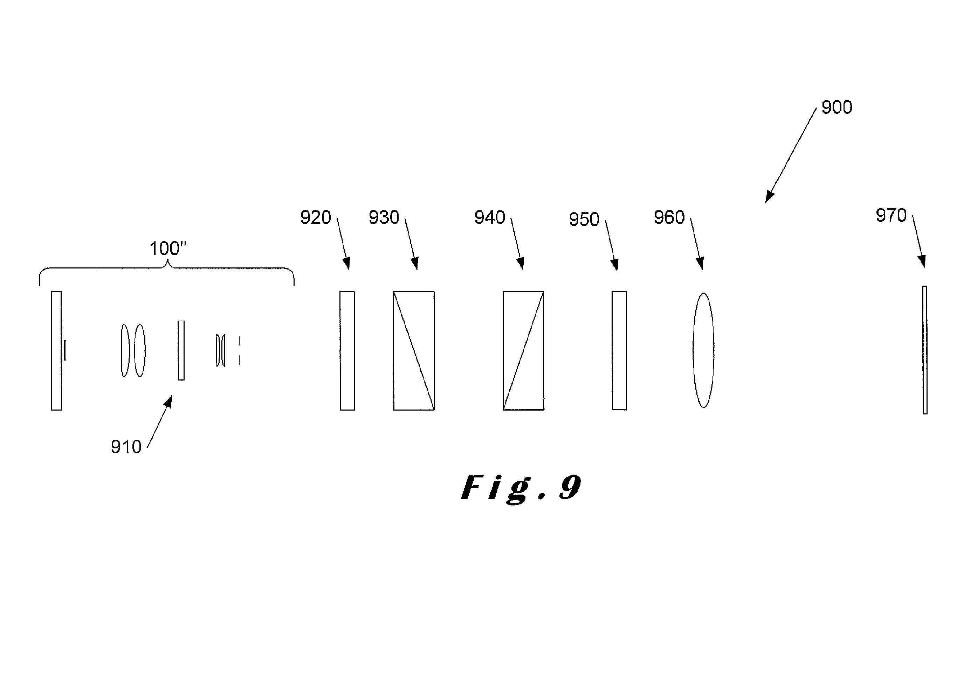

Figure 9 illustrates an embodiment of a shearing interferometer 900. In a shearing interferometer, a shear plate or prism is used to shear an incident coherent beam and to generate first and second reflected beams that provide an interference pattern where they overlap on a surface. This provides a simple way to observe interference, and to test the collimation of light beams. This is particularly the case where light from a laser source has a coherence length that is considerably longer than the thickness of the shear plate or prism.

The shearing interferometer 900 shown in Figure 8 comprises an optical system 100" that is similar to optical system 100 shown in Figure 1 but without one of the projection lenses 170 and with the integrator 140 being replaced by a diffuser 910. Light leaving the optical system 100" passes through a first polarising element 920, a first Wollaston prism 930, and a second Wollaston prism 940 before passing through a second polarising element 950. Light leaving the second polarising element 950 is focussed by a lens 960 onto a screen 970 set at the focal point of the lens 960.

In the embodiment shown in Figure 9, two beams of light are produced which are projected onto the screen 970 at the distance governed by the focal length of the lens 960. The two beams interfere at the screen 970 to provide interference fringes.

Although a shearing interferometer is described with reference to Figure 8 as having Wollaston prisms and polarising elements, it will readily be appreciated that it would also be possible to provide such an interferometer where the Wollaston prisms and polarising elements are replaced by a gratings.

The present invention can also be used in off-axis holographic systems where a large number of fringes are required with good fringe quality and low phase noise.

As will readily be understood, the present invention can be used in many applied interferometry techniques including profilometry and deflectometry.

Although the present invention has been described with reference to specific types of interferometer systems, it will readily be appreciated that it can be applied to any type of interferometer system where speckle contrast needs to be reduced.

## Claims

1. A method of generating reduced speckle interference fringes in an interferometry system, the method comprising the steps of:
a) generating a primary light source comprising a plurality of coherent light beams;
b) integrating the plurality of coherent light beams to provide a secondary light source; and
c) using the secondary light source to generate reduced speckle interference fringes;
**characterised in that** the secondary light source has reduced spatial coherence.

2. A method according to claim 1, wherein step c) comprises splitting the secondary light source into first and second light beams which traverse respective first and second light paths in the interferometry system, and recombining the first light beam and the second light beam to produce the interference fringes.

3. Interferometry apparatus for generating reduced speckle interference fringes, **characterised in that** the apparatus further comprises a secondary light source for generating the reduced speckle interference fringes.

4. Interferometry apparatus according to claim 3, wherein the secondary light source comprises a random mix of light beams that are incoherent with respect to one another.

5. Interferometry apparatus according to claim 3 or 4, wherein light from the secondary light source is divided into first and second light beams, the first and second light beams being directed along respective first and second paths and being recombined to produce the interference fringes.

6. Interferometry apparatus according to any one of claims 3 to 5, wherein the apparatus comprises a Mach-Zendher interferometer.

7. Interferometry apparatus according to any one of claims 3 to 5, wherein the apparatus comprises a Linnik interferometer.

8. Interferometry apparatus according to any one of claims 3 to 5, wherein the apparatus comprises a Michelson interferometer.

9. Interferometry apparatus according to any one of claims 3 to 5, wherein the apparatus comprises a Sagnac interferometer.

10. Interferometry apparatus according to any one of claims 3 to 5, wherein the apparatus comprises a Mireau interferometer.

11. Interferometry apparatus according to claim 3 or 4, wherein the apparatus comprises a shearing interferometer.

12. Interferometry apparatus according to claim 11, wherein the shearing interferometer comprises first and second polarising elements, and first and second Wollaston prisms.
